# EUROPEAN PATENT SPECIFICATION

(11) **EP 2 128 007 B1**
(45) Date of publication and mention of the grant of the patent: **27.04.2011**
(21) Application number: 09155226.5
(22) Date of filing: 16.03.2009
(51) Int. Cl.: B62J 17/06, B62K 19/46

(54) **Motorcycle**
Motorrad
Motocyclette

(30) Priority: 29.05.2008 JP 2008140848
(43) Date of publication of application: 02.12.2009
(73) Proprietor: Honda Motor Co., Ltd., Tokyo 107-8556 (JP)
(72) Inventor: Odagiri, Hiroshi c/o Honda R&D Co., Ltd., Saitama 351-0193 (JP); Kikuno, Junji c/o Honda R&D Co., Ltd., Saitama 351-0193 (JP); Kubota, Yoshitaka c/o Honda R&D Co., Ltd., Saitama 351-0193 (JP); Kawame, Kazunori c/o Honda R&D Co., Ltd., Saitama 351-0193 (JP)
(74) Representative: Liska, Horst

(56) References cited:
- JP-A- 4 331 682
- JP-A- 8 230 738
- JP-A- 11 152 068
- JP-A- 2007 290 460

## Description

### Technical Field

The present invention relates to a motorcycle according to the preamble of claim 1.

### Background Art

A conventional type motorcycle provided with an upper inner member having a bent part protruded in a forward direction of a vehicle when the vehicle is viewed from the side and bent, a lower inner member an upper part of which is joined to the back of the upper inner member and an inner rack formed between the upper inner member and the lower inner member is known (for example, refer to JP-A-2006-036013).

A motorcycle according to the preamble of claim 1 is known from JP 08-230738 A.

JP 2007-290460 A discloses a scooter type vehicle having a bag-type inner rack of which the upper portion opens to a leg shield for covering the front of a driver seated on a seat. A cover member is jointed with the inner rack through a hinge so as to oscillate in a vertical direction, and is formed so that an opening of the inner rack be covered when the cover member is closed and a roughly total surface of the opening be opened when the cover member is opened. Furthermore, a retaining device for retaining respective closed and opened states is provided.

### Problem to be Solved by the Invention

In the motorcycle disclosed in the Japanese patent document

JP-A-2006-036013, as the upper part of the lower inner member is joined to a part on the upside of the bent part of the upper inner member and an enclosure wall of the inner rack is formed by overhanging the lower inner member toward the side of a rider, the inner rack (the enclosure wall) is greatly swollen rearward and is exposed when the vehicle is viewed from the side. Therefore, as the inner rack is more swollen when the lower inner member is large-sized to secure the capacity of the inner rack, it is difficult to increase the capacity of the inner rack, keeping the appearance quality of the motorcycle.

The present invention is made in view of the above-mentioned problem and its object is to provide a motorcycle where its appearance quality can be enhanced and the capacity of an inner rack can be easily increased, keeping the appearance quality.

### Means for Solving the Problem

This object is achieved by a motorcycle according to claim 1.

The motorcycle is provided with an upper inner member having a bent part protruded in a forward direction of the vehicle when the vehicle is viewed from the side and bent, a lower inner member joined to the back of the upper inner member, a front cover joined to the upper inner member and the lower inner member and covering the front of a vehicle body and an inner rack which is formed between the upper inner member and the lower inner member and an upper part of which is open, and a front wall, a bottom wall and a side wall of the upper inner member are formed by overhanging the inside in a direction of vehicle width of a lower half under the bent part of the upper inner member in the forward direction of the vehicle, the upper part formed to be a flat face when the vehicle is viewed from the side of the lower inner member is joined to the side wall of the upper inner member along the side wall so that a rear wall of the inner rack is formed in the upper part of the lower inner member and is provided with a flat face in the side view and the front wall, the bottom wall and the side wall of the upper inner member are covered with the front cover.

Furthermore, according to the present invention, an uplifted part uplifted toward the rear of the vehicle and covering the body frame is provided to the center in the direction of vehicle width of the upper inner member, a concave portion made concave in a forward direction of the vehicle is provided to the center in the direction of vehicle width of the upper part of the lower inner member, the concave portion is formed so that it is gradually shallower in a lower part of the lower inner member, the uplifted part and the concave part are joined so as to form the inner rack, a loading hook is provided to the uplifted part and the concave portion of the lower inner member is arranged under the loading hook.

The present invention according to Claim 2 is based upon the configuration of the present invention according to Claim 1 and has a characteristic that a shielding wall that covers a part of the opening of the inner rack is formed by a bent upper end of the lower inner member.

The present invention according to Claim 3 is based upon the configuration of the present invention according to Claim 1 or 2 and has a characteristic that a protruded piece protruded upward is provided to the concave portion of the lower inner member, the protruded piece is overlapped with the upper inner member, a fastening member for fastening the loading hook is adapted to pierce the overlapped part, and the fastening member is fastened to the body frame so as to fix the upper inner member and the lower inner member to the body frame.

### Effect of the Invention

According to the motorcycle disclosed in Claim 1, as a front enclosure wall of the inner rack is formed by overhanging the inside in the direction of vehicle width of the lower half under the bent part of the upper inner member in a forward direction of the vehicle, the upper part formed to be the flat face when the vehicle is viewed from the side of the lower inner member is joined to the front enclosure wall of the upper inner member along the front enclosure wall and the front enclosure wall is covered with the front cover, the enclosure wall of the inner rack can be prevented from being swollen and exposed when the vehicle is viewed from the side and the appearance quality of the motorcycle can be enhanced. As the inside in the direction of vehicle width of the lower half under the bent part of the upper inner member is overhanged in a forward direction of the vehicle and the front enclosure wall of the inner rack is covered with the front cover, the capacity of the inner rack can be easily increased, keeping the appearance quality of the motorcycle.

Furthermore, as the uplifted part uplifted toward the rear of the vehicle and covering the body frame is provided to the center in the direction of vehicle width of the upper inner member, the concave portion made concave in a forward direction of the vehicle is provided to the center in the direction of vehicle width of the upper part of the lower inner member, the concave portion is formed so that it is gradually shallower in the lower part of the lower inner member and the inner rack is formed by joining the uplifted part and the concave portion, the upper and lower inner members can be joined so that the uplifted part forms the face on which the upper and lower inner members continue. Therefore, the upper and lower inner members can seem integrated and the appearance quality of the motorcycle can be enhanced. As the concave portion is provided to the center in the direction of vehicle width of the upper part of the lower inner member, the opening of the inner rack can be set in a rearward direction of the vehicle off the uplifted part of the upper inner member. Therefore, access to the inner rack through the opening can be facilitated.

Moreover, as the loading hook is provided to the uplifted part and the concave portion of the lower inner member is arranged under the loading hook, a luggage string hooked on the loading hook is supported by the concave portion. Hereby, as the luggage is hardly swung laterally, it can be stably carried. Therefore, a use of the inner rack can be increased.

According to the motorcycle disclosed in Claim 2, as the shielding wall that covers a part of the opening of the inner rack is formed by a bent upper end of the lower inner member, rigidity in the joined part of the upper and lower inner members can be enhanced and an article housed in the inner rack can be prevented from jumping out.

According to the motorcycle disclosed in Claim 3, as the protruded piece protruded upward is provided to the concave portion of the lower inner member, the protruded piece is overlapped with the upper inner member, the fastening member for fastening the loading hook pierces the overlapped part and the upper inner member and the lower inner member are fixed to the body frame by fastening the fastening member to the body frame, rigidity in the joined part of the upper and lower inner members can be enhanced. As the upper and lower inner members are fixed to the body frame by the member for fastening the loading hook, the number of parts and a manufacturing cost can be reduced.

### Brief Description of the Drawings

Fig. 1 is a left side view for explaining one embodiment of a motorcycle according to the invention.
Fig. 2 is an enlarged side view showing a circumference of a front cover and an inner cover respectively shown in Fig. 1.
Fig. 3 is an enlarged side view for explaining a part in which the front cover and the inner cover respectively shown in Fig. 1 are fastened.
Fig. 4 is a perspective view viewed from the left rear showing the circumference of the front cover and the inner cover respectively shown in Fig. 1.
Fig. 5 is a top view showing the circumference of the front cover and the inner cover respectively shown in Fig. 1.
Fig. 6 is a back view showing the circumference of the inner cover shown in Fig. 1.
Fig. 7 is a sectional view viewed along a line A-A shown in Fig. 6.
Fig. 8 is a left side view showing an upper inner member.
Fig. 9 is a left side view showing a lower inner member.
Fig. 10 is a front view showing a circumference of a handlebar in a state in which a front handlebar cover is removed.
Fig. 11 is a perspective view viewed from the left front showing the circumference of the handlebar shown in Fig. 10.
Fig. 12 is a perspective view viewed from the right front showing a circumference of a part in which a step floor, a rear center cover and a rear side cover are fastened.
Fig. 13 is a perspective view for explaining a state in which the rear center cover and the rear side cover respectively shown in Fig. 12 are removed.

### Best Mode for Carrying Out the Invention

Referring to the drawings, one embodiment of a motorcycle according to the invention will be described in detail below. The drawings shall be viewed in a direction of reference numerals, in the following description, the front, the rear, the right, the left, the upside and the downside are those viewed from a rider, and in the drawings, Fr denotes a forward direction of a vehicle, Rr denotes a rearward direction, L denotes the left, R denotes the right, U denotes the upside, and D denotes the downside.

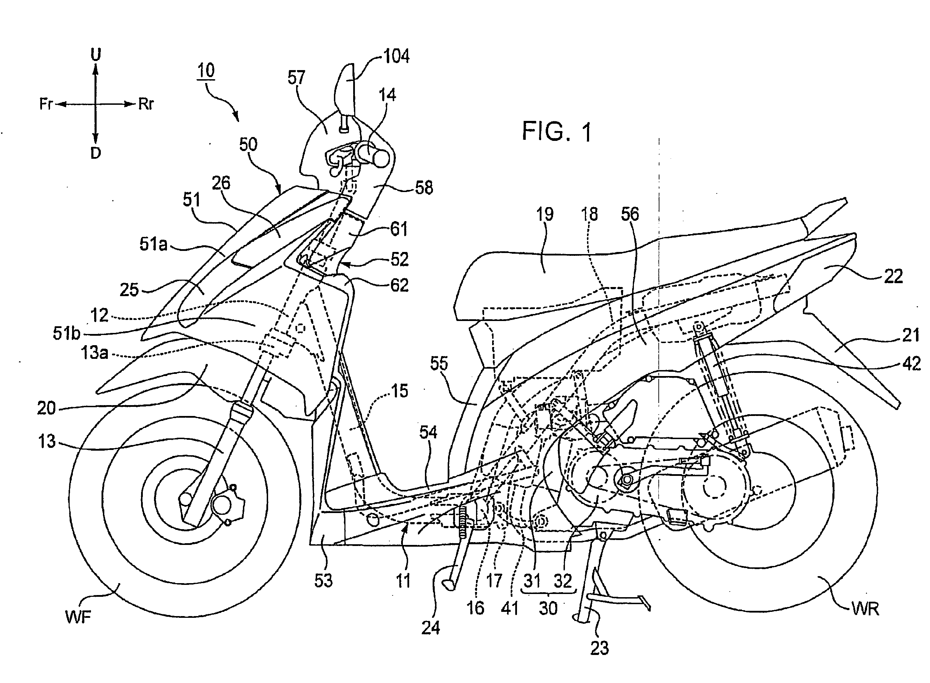

In the motorcycle 10 equivalent to this embodiment, as shown in Figs. 1 to 3, a pair of right and left front forks 13 that support a front wheel WF are steerably supported via a steering stem 13a by a head pipe 12 located at a front end of a body frame 11. A handlebar 14 for steering is attached to an upper part of the steering stem 13a.

The body frame 11 is an under bone type in which one main frame 15 is extended diagonally downward and rearward from the head pipe 12, and a part between the head pipe 12 and a seat 19 for occupants is lowered so as to facilitate a straddle. In this lowered part, a step floor 54 for a rider seated on the seat 19 to put his/her feet is arranged.

A rear end of the main frame 15 is joined to an intermediate part in a lateral direction of a cross frame 16 laterally extended in an intermediate part in a longitudinal direction of a lower part of a vehicle body. A pair of right and left pivot plates 17 that vertically swingably support the front of a swing unit 30 via a suspension link 41 are joined to right and left ends of the cross frame 16.

Besides, front ends of a pair of right and left rear frames 18 are joined to the right and left ends of the cross frame 16. The rear frame 18 is extended diagonally upward and rearward from the cross frame 16. The seat 19 having bearing surfaces for the rider and for a passenger in the longitudinal direction is arranged on the upside of the rear frame 18. A reference numeral 20 in Fig. 1 denotes a front fender, 21 denotes a rear fender, 22 denotes a tail light, 23 denotes a main stand, and 24 denotes a side stand.

In the swing unit 30, an engine 31 in its front and a power transmission mechanism 32 on the left side of its rear are integrated, the front is vertically swingably supported via the suspension link 41 by the pivot plates 17, and the left side of the rear is approachably and separably supported via a rear cushion 42 by the rear frame 18. A rear wheel WR is supported by a rear end of the power transmission mechanism 32.

The body frame 11 is covered with a body cover 50 mainly made of synthetic resin, and the body cover 50 is provided with a front cover 51 that covers the front (the head pipe 12 and the circumference of an upper part of the main frame 15) of the body frame 11 from its front side, an inner cover 52 that covers the front of the body frame 11 from its rear side, an under cover 53 that covers a lower part (the circumference of a lower part of the main frame 15) of the body frame 11 from the downside so that the under cover continues to the downside of the front cover 51, the step floor 54 that covers the lower part of the body frame 11 from the upside, a rear center cover 55 that covers the front side (the circumference of the front of the rear frame 18) of the rear of the body frame 11 from the front side and a rear side cover 56 that covers the rear (the circumference of the rear frame 18) of the body frame 11 from the side. The circumference of the handlebar 14 is covered with a front handlebar cover 57 and a rear handlebar cover 58.

The front cover 51 is provided with an inclined front wall part 51 a that forms a slope inclined forward and downward in its front and a side wall part 51 b extended diagonally downward and rearward from both sides of a lower part of the inclined front wall part 51a. A headlamp 25 and a front blinker 26 are arranged on both right and left sides of the inclined front wall part 51 a.

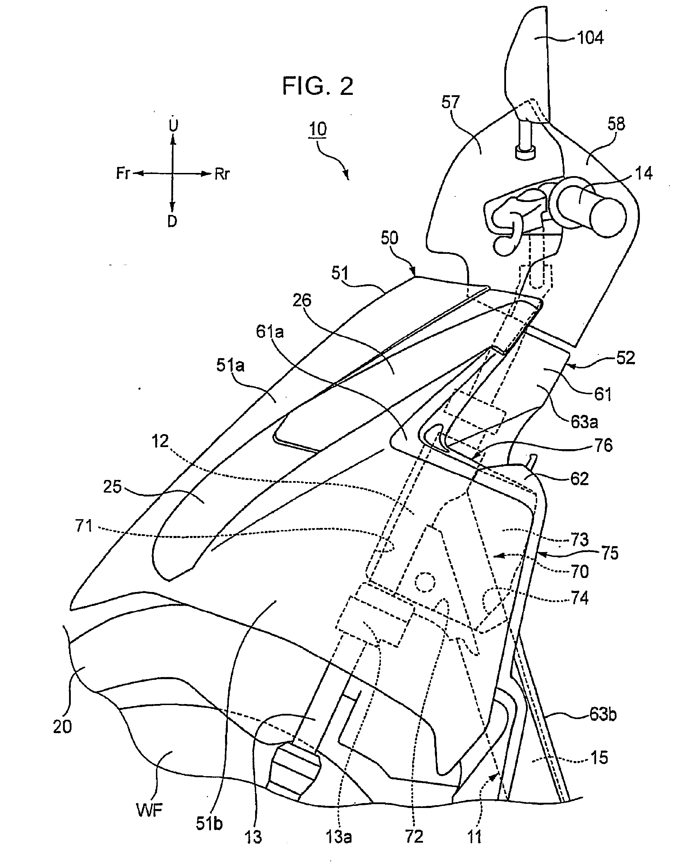

In this embodiment, as shown in Figs. 2 to 7, the inner cover 52 is configured by an upper inner member 61 having a bent part 61 a protruded in a forward direction of the vehicle and bent in the side view and a lower inner member 62 joined to the back of the upper inner member 61, and an inner rack 70 an upper part of which is open is formed between the upper inner member 61 and the lower inner member 62. The upper and lower inner members 61, 62 are joined to the front cover 51 and are fixed to the front cover 51 and the head pipe 12.

In this embodiment, in the upper inner member 61, a front wall 71, a bottom wall 72 and a side wall 73 which are respectively a front enclosure wall of the inner rack 70 are formed by overhanging the inside in a direction of vehicle width of a lower half on the downside of the bent part 61 a of the upper inner member 61 in a forward direction of the vehicle. An upper part of the lower inner member 62 is joined to an upper part of the side wall 73 of the upper inner member 61 in the side view. A rear wall 74 which is a rear enclosure wall of the inner rack 70 is formed in the upper part of the lower inner member 62 and is provided with a flat face 75 in the side view.

In this embodiment, a first uplifted part 63a which is uplifted toward the rear of the vehicle and covers each rear of the head pipe 12 and the main frame 15 is formed in the center in the direction of vehicle width of the upper inner member 61 and a concave portion 64 made concave in a forward direction of the vehicle is formed in the center in the direction of vehicle width of the lower inner member 62. The inner rack 70 is formed by joining the first uplifted part 63a and the concave portion 64 and is divided in two in the direction of vehicle width by the first uplifted part 63a. The concave portion 64 is formed so that it is gradually shallower in a lower part of the lower inner member 62. In the lower inner member 62, a second uplifted part 63b that covers the rear of the main frame 15 is formed on the downside of the concave portion 64.

In this embodiment, the side wall 73 of the upper inner member 61 is extended in a rearward direction of the vehicle from the first uplifted part 63a in the side view. The outside of the side wall 73 of the upper inner member 61 is covered with the side wall part 51 b of the front cover 51.

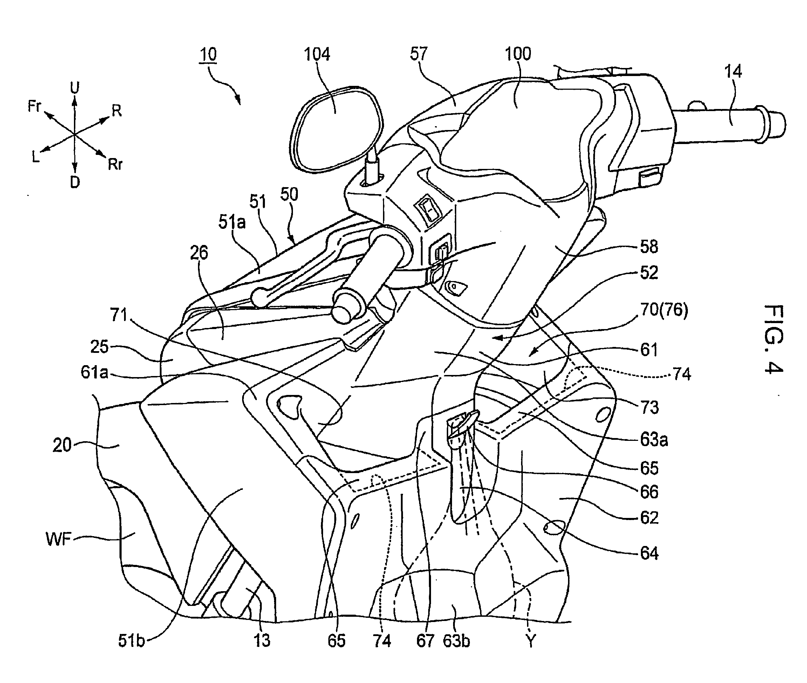

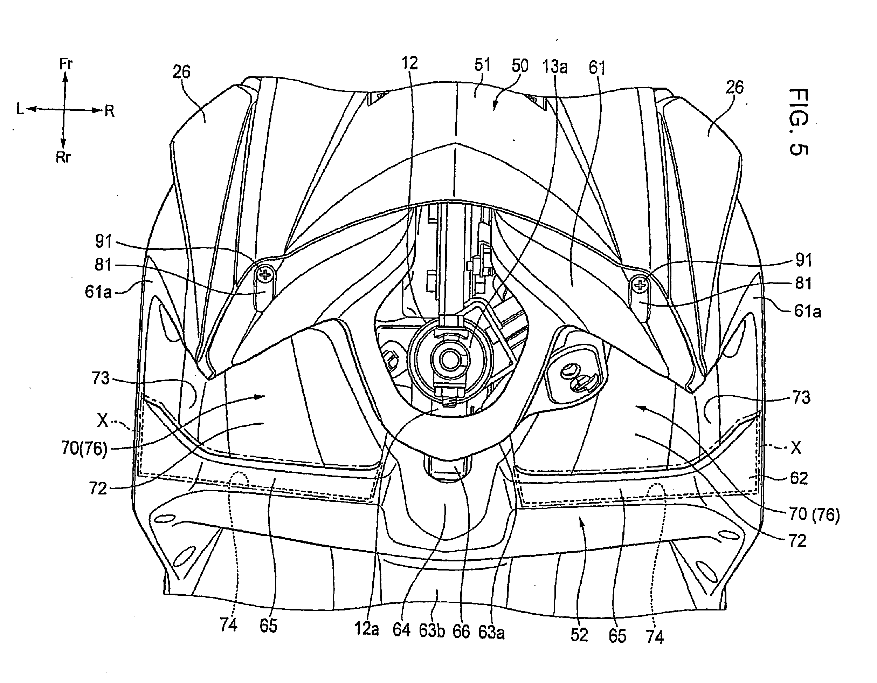

In this embodiment, as shown in Figs. 4 and 5, a shielding wall 65 that covers a part of an opening 76 of the inner rack 70 is formed at an upper end of the lower inner member 62 by bending the upper end of the lower inner member 62. The shielding wall 65 denotes a part in a range X shown in Fig. 5.

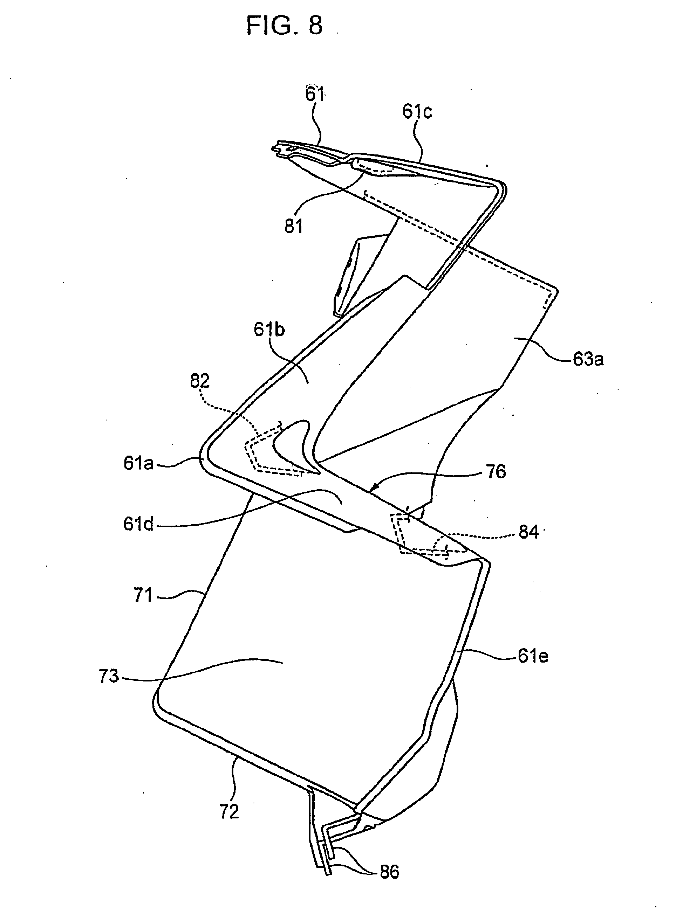

The upper inner member 61 is provided with the first uplifted part 63a formed in the center in the direction of vehicle width of its upper half and uplifted toward the rear of the vehicle, the front wall 71, the bottom wall 72 and the side wall 73 which are respectively arranged on both sides in the direction of vehicle width of the first uplifted part 63a and which are respectively the front enclosure wall of the inner rack 70 formed in the lower half of the upper inner member 61, a first inclined part 61 b extended upward and rearward from the bent part 61 a and joined to a rear edge of the inclined front wall part 51 a of the front cover 51, a second inclined part 61 c extended upward and forward from an upper end of the first inclined part 61 b and joined to an upper edge of the inclined front wall part 51 a, a third inclined part 61 d extended downward and rearward from the bent part 61 a and joined to an upper edge of the side wall part 51 b of the front cover 51 and a forth inclined part 61 e extended downward and forward from a rear end of the third inclined part 61 d and joined to a rear edge of the side wall part 51 b as shown in Fig. 8.

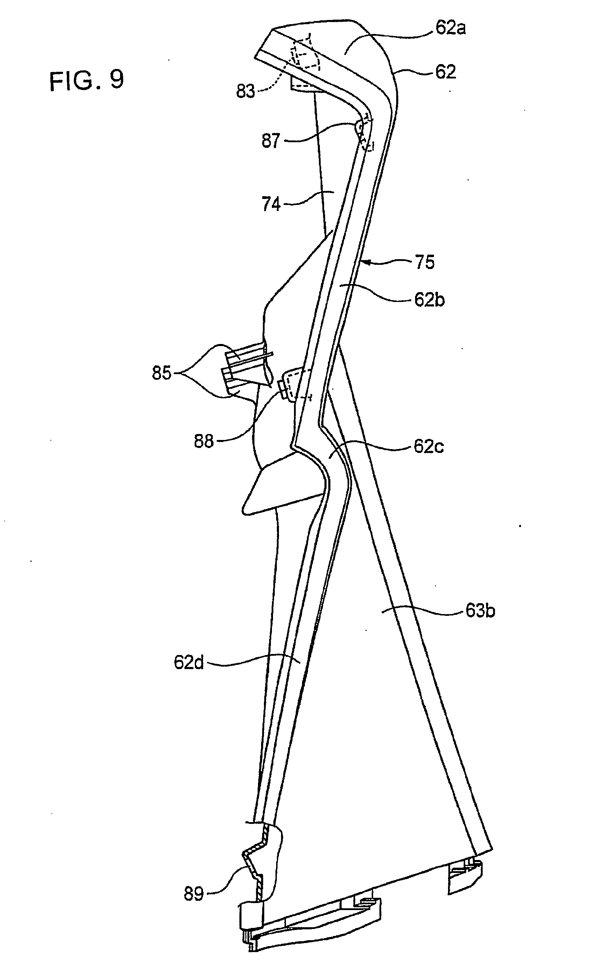

The lower inner member 62 is provided with the second uplifted part 63b formed in the center in the direction of vehicle width of its lower half and uplifted toward the rear of the vehicle, the rear wall 74 (the flat face 75) which is respectively arranged on both sides in the direction of vehicle width of the second uplifted part 63b and which is the rear enclosure wall of the inner rack 70 formed in the upper part of the lower inner member 62, a joined part 62a formed at the upper end of the lower inner member 62 and joined to the rear end of the third inclined part 61 d of the upper inner member 61, a first inclined part 62b extended downward and forward from the joined part 62a and joined to the rear edge of the side wall part 51 b of the front cover 51, a curved part 62c curved downward and rearward from a lower end of the first inclined part 62b and joined to an upper end of the under cover 53 and a second inclined part 63d extended downward and forward from a lower end of the curved part 62c and joined to a rear edge of the under cover 53 as shown in Fig. 9. The lower half of the lower inner member 62 denotes a part on the downside of a pair of mounting bosses 85 described later.

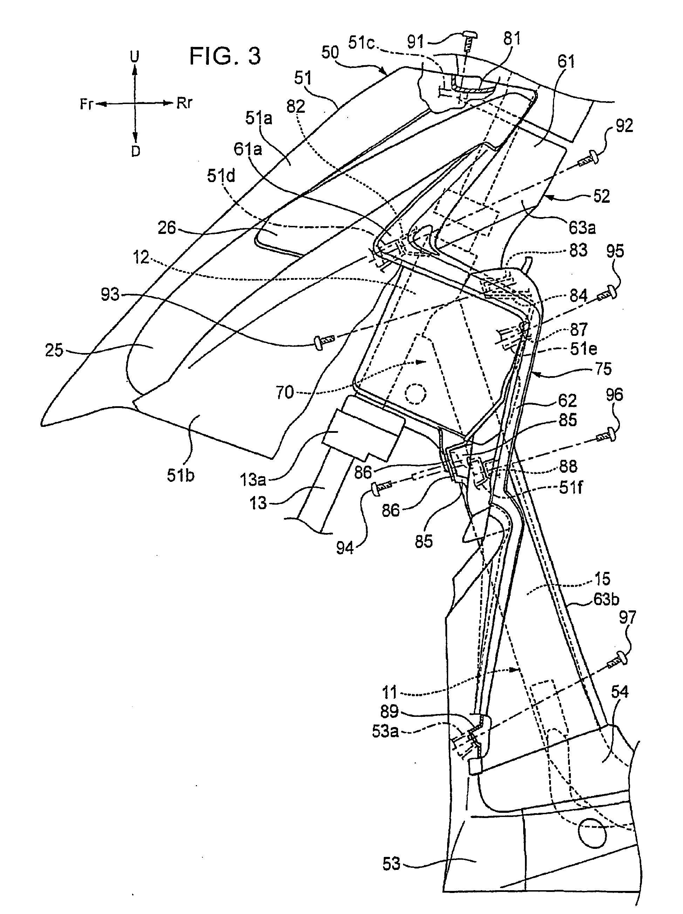

As shown in Figs. 3 and 8, an installation seat 81 fastened to a mounting piece 51 c of the front cover 51 by a first fixing screw 91 is formed in the second inclined part 61c of the upper inner member 61. A mounting bracket 82 fastened to a mounting boss 51 d of the front cover 51 by a second fixing screw 92 is formed in the bent part 61 a of the upper inner member 61. A fitting concave portion 84 into which a fitting convex portion 83 formed in the joined part 62a of the lower inner member 62 is fitted from the rear and which is fastened to the fitting convex portion 83 by a third fixing screw 93 is formed at the rear end of the third inclined part 61 d of the upper inner member 61. A pair of mounting brackets 86 fastened to the pair of mounting bosses 85 formed in an intermediate part of the lower inner member 62 by fourth fixing screws 94 are formed at a lower end of the bottom wall 72 of the upper inner member 61.

Further, as shown in Figs. 3 and 9, a mounting bracket 87 fastened to a mounting boss 51 e of the front cover 51 by a fifth fixing screw 95 is formed at the upper end of the first inclined part 62b of the lower inner member 62. A mounting bracket 88 fastened to a mounting boss 51f of the front cover 51 by a sixth fixing screw 96 is formed at the lower end of the first inclined part 62b of the lower inner member 62. A mounting bracket 89 fastened to a mounting boss 53a of the under cover 53 by a seventh fixing screw 97 is formed at a lower end of the second inclined part 63d of the lower inner member 62. The installation seat 81, the mounting bracket 82, the fitting convex portion 83, the fitting concave portion 84, the pair of mounting bosses 85, the pair of mounting brackets 86, the mounting bracket 87, the mounting bracket 88 and the mounting bracket 89 respectively described above are symmetrically formed on both sides in the direction of vehicle width.

In this embodiment, as shown in Figs. 4 to 7, a loading hook 66 is provided to the first uplifted part 63a of the upper inner member 61 and the concave portion 64 of the lower inner member 62 is arranged under the loading hook 66. A chain line Y in Fig. 4 shows a luggage hooked on the loading hook 66.

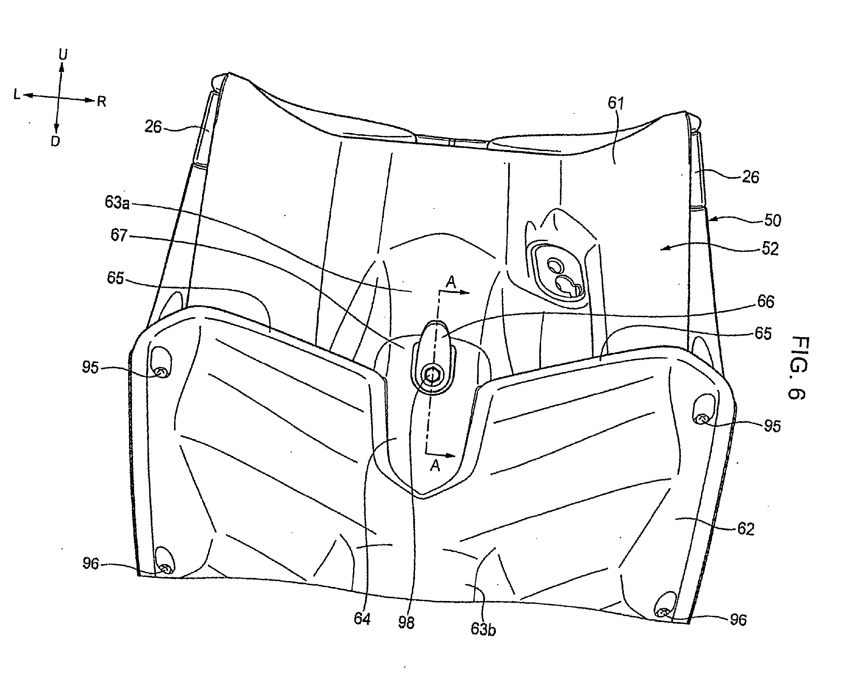

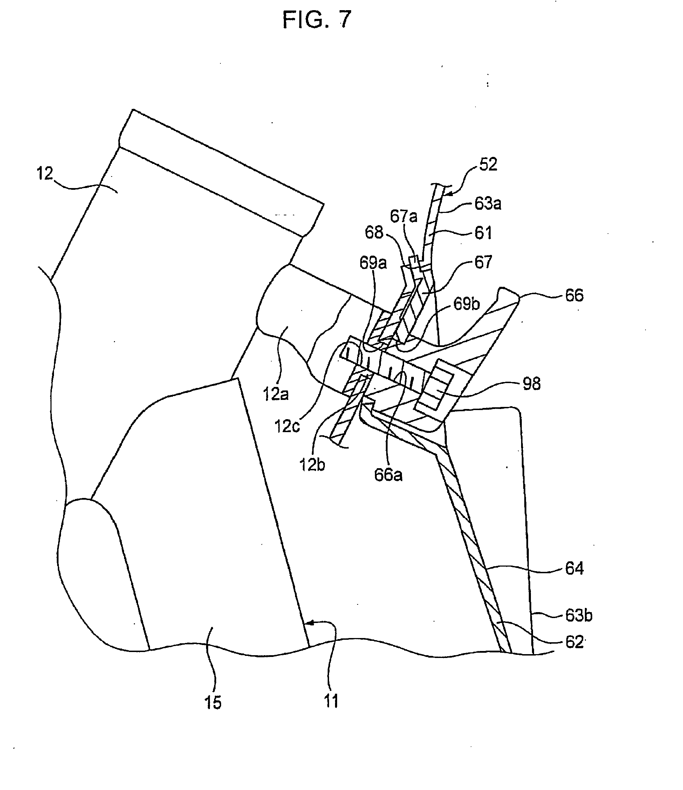

In this embodiment, as shown in Figs. 6 and 7, a protruded piece 67 protruded upward is formed in the concave portion 64 of the lower inner member 62 and is overlapped with the first uplifted part 63a of the upper inner member 61 to be on the same face. A fitting piece 67a protruded upward is formed at an upper end of the protruded piece 67 and is fitted into a fitting hole 68 formed in the first uplifted part 63a of the upper inner member 61.

In this embodiment, as shown in Fig. 7, a fitting hole 69a formed in the upper inner member 61 is fitted to a convex portion 12b of a mounting bracket for the hook 12a extended rearward from the head pipe 12 in a part in which the first uplifted part 63a of the upper inner member 61 and the protruded piece 67 of the lower inner member 62 are overlapped, and the base of the loading hook 66 is fitted into a fitting hole 69b formed in the lower inner member 62. A fastening bolt (a fastening member) 98 is inverted into a bolt insertion hole 66a of the loading hook 66 and is fastened into a tapped hole 12c of the mounting bracket for the hook 12a. Hereby, the upper and lower inner members 61, 62 are fixed to the mounting bracket for the hook 12a together with the loading hook 66 by the fastening bolt 98.

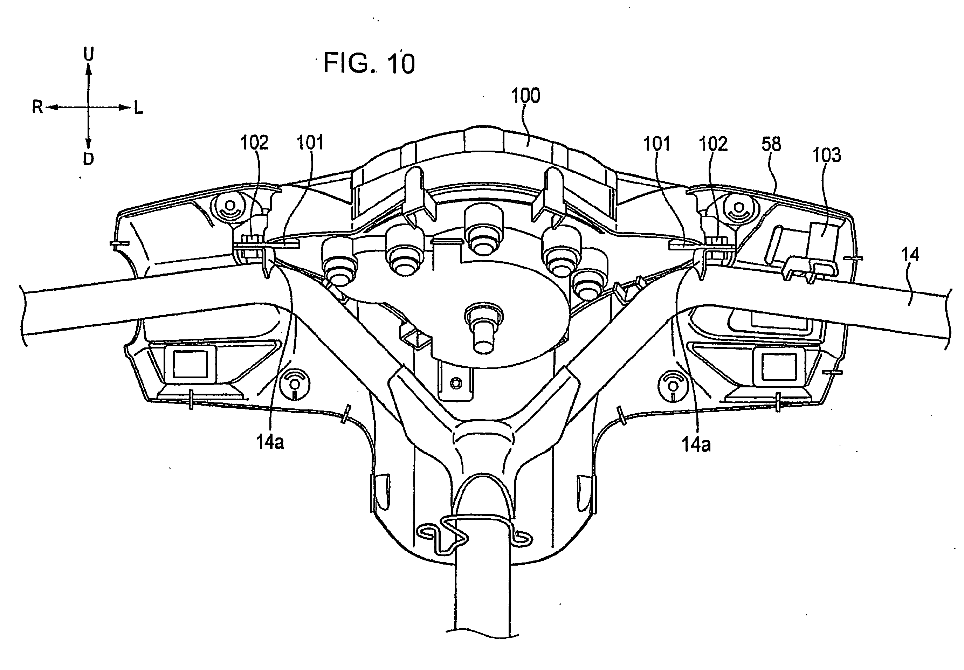

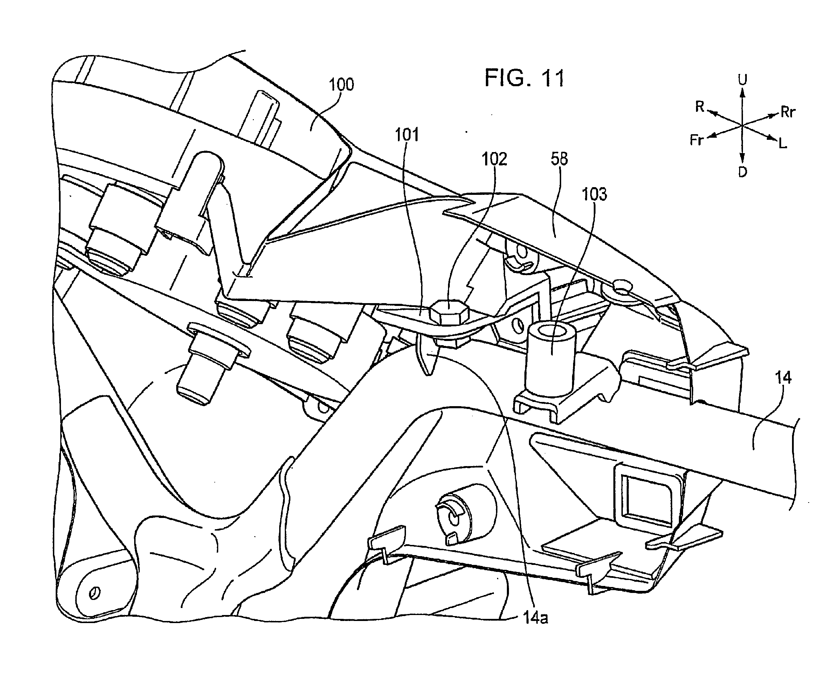

In this embodiment, as shown in Figs. 4, 10 and 11, a speedometer 100 is arranged inside the front handlebar cover 57 and the rear handlebar cover 58 and is fixed to the handlebar 14 by fastening each mounting piece 101 formed at both ends in the direction of vehicle width to each mounting stay 14a formed in an upper part of the handlebar 14 by each fastening bolt 102.

The rear handlebar cover 58 is fastened to the speedometer 100 by a fixing screw not shown and the front handlebar cover 57 is fastened to the rear handlebar cover 58 by a fixing screw not shown. A mounting boss 103 for a mirror for mounting the side mirror 104 (see Fig. 2) is formed on the left side in the direction of vehicle width of the handlebar 14.

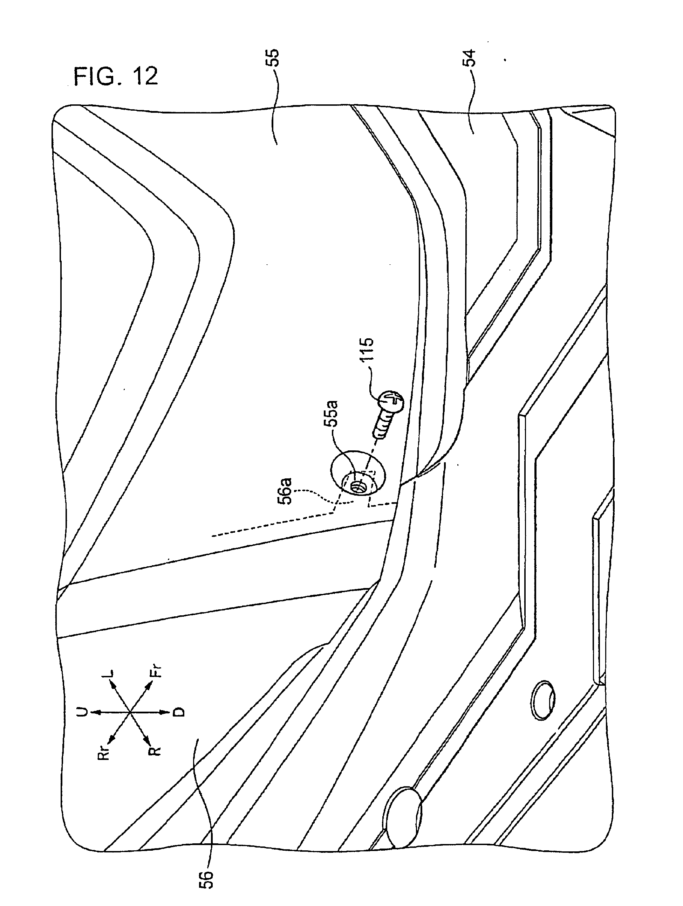

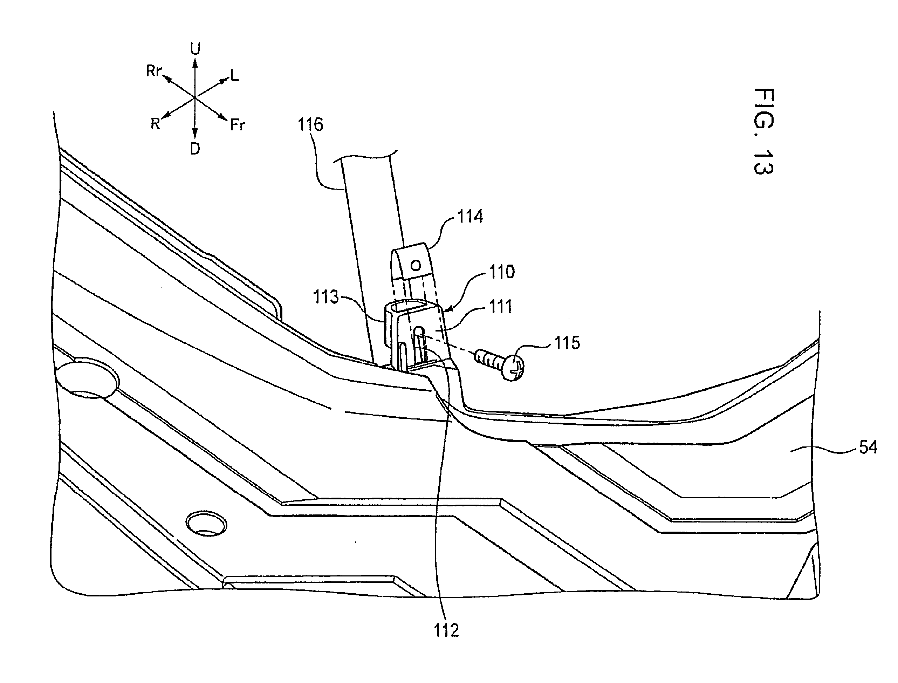

Further, in this embodiment, as shown in Figs. 12 and 13, the rear center cover 55 and the rear side cover 56 are fixed to the step floor 54 by jointly fastening a mounting part 55a formed at a lower end of the rear center cover 55 and a mounting stay 56a formed at a front lower end of the rear side cover 56 to a mounting part for the cover 110 formed in the step floor 54 by a fixing screw 115.

The mounting part for the cover 110 is provided with a flat body 111 extended upward from the step floor 54, a long screw insertion hole 112 formed in the body 111, a protecting part 113 which is formed on the back of the body 111, which covers an end of the fixing screw 115 and a section of which is semicylindrical and a clip nut 114 inserted and fixed into/to the body 111 as shown in Fig. 13. Hereby, as the end of the fixing screw 115 is prevented from being protruded inside the mounting part for the cover 110, interference between the end of the fixing screw 115 and a harness 116 located inside the mounting part for the cover 110 is prevented.

As described above, according to the motorcycle 10 equivalent to this embodiment, as the front wall 71, the bottom wall 72 and the side wall 73 which are respectively the front enclosure wall of the inner rack 70 are formed by overhanging the inside in the direction of vehicle width of the half under the bent part 61 a of the upper inner member 61 in a forward direction of the vehicle, the flat face 75 in the side view of the rear wall 74 formed in the upper part of the lower inner member 62 is joined to the side wall 73 of the upper inner member 61 along the side wall, as the front wall 71, the bottom wall 72 and the side wall 73 are covered with the side wall part 51 b of the front cover 51, the enclosure wall of the inner rack 70 can be prevented from being overhanged and exposed in the side view, and the appearance quality of the motorcycle 10 can be enhanced. As the inside in the direction of vehicle width of the half under the bent part 61 a of the upper inner member 61 is overhanged in a forward direction of the vehicle and the front wall 71, the bottom wall 72 and the side wall 73 respectively of the inner rack 70 are covered with the side wall part 51 b of the front cover 51, the capacity of the inner rack 70 can be easily increased, keeping the appearance quality of the motorcycle 10.

Besides, according to the motorcycle 10 equivalent to this embodiment, as the shielding wall 65 that covers a part of the opening 76 of the inner rack 70 is formed by bending the upper end of the lower inner member 62, the rigidity of the joined part of the upper and lower inner members 61, 62 can be enhanced, and an article housed in the inner rack 70 can be prevented from jumping out.

In addition, according to the motorcycle 10 equivalent to this embodiment, as the first uplifted part 63a that is uplifted toward the rear in the vehicle and covers the head pipe 12 and the main frame 15 is provided to the center in the direction of vehicle width of the upper inner member 61, the concave portion 64 made concave in a forward direction of the vehicle is provided to the center in the direction of vehicle width in the upper part of the lower inner member 62, the concave portion 64 is formed so that it is gradually shallower downward in the lower inner member 62 and the inner rack 70 is formed by joining the first uplifted part 63a and the concave portion 64, the upper and lower inner members 61, 62 can be joined so that the first uplifted part 63a forms the face on which the upper and lower inner members 61, 62 continue. Therefore, the upper and lower inner members 61, 62 can seem integrated and the appearance quality of the motorcycle 10 can be enhanced. As the concave portion 64 is provided to the center in the direction of vehicle width in the upper part of the lower inner member 62, the opening 76 of the inner rack 70 can be set off the first uplifted part 63a of the upper inner member 61 at the rear of the first uplifted part in the vehicle. Therefore, access to the inner rack 70 through the opening 76 is facilitated.

In addition, according to the motorcycle 10 equivalent to this embodiment, as the loading hook 66 is provided to the first uplifted part 63a and the concave portion 64 of the lower inner member 62 is arranged on the downside of the loading hook 66, the concave portion 64 supports a luggage string hooked on the loading hook 66. Hereby, as the luggage is hardly swung laterally, the luggage can be stably carried. Therefore, a use of the inner rack 70 can be increased.

In addition, according to the motorcycle 10 equivalent to this embodiment, as the upper and lower inner members 61, 62 are fixed to the body frame 11 by providing the protruded piece 67 protruded upward to the concave portion 64 of the lower inner member 62, by overlapping the protruded piece 67 with the upper inner member 61, by making the fastening bolt 98 for fastening the loading hook 66 pierce the overlapped part and by fastening the fastening bolt 98 to the mounting bracket for the hook 12a of the head pipe 12, the rigidity of the joined part of the upper and lower inner members 61, 62 can be enhanced. As the upper and lower inner members 61, 62 are fixed to the body frame 11 by the bolt 98 for fastening the loading hook 66, the number of parts and a manufacturing cost can be reduced.

In addition, according to the motorcycle 10 equivalent to this embodiment, as the speedometer 100 is fixed to the handlebar 14 and the handlebar covers 57, 58 are fixed to the speedometer 100, the speedometer 100 and the handlebar covers 57, 58 can be easily aligned with the handlebar 14. The heavy speedometer 100 can be firmly supported against the vibration of the vehicle. Hereby, as the handlebar covers 57, 58 do not require so much rigidity, they can be lightened and small-sized.

Further, according to the motorcycle 10 equivalent to this embodiment, as the protecting part 113 that covers the end of the fixing screw 115 fastened to the mounting part for the cover 110 is formed in the mounting part for the cover 110 for fixing the body covers 55, 56, the end of the fixing screw 115 can be prevented from being protruded inside the mounting part for the cover 110. Hereby, interference between the end of the fixing screw 115 and the harness 116 located inside the mounting part for the cover 110 when the fixing screw 115 is fastened can be prevented.

The invention is directed to provide a motorcycle as defined in claim 1 where its appearance quality can be enhanced and the capacity of an inner rack can be easily increased, keeping the appearance quality.

## Claims

1. A motorcycle (10) as a vehicle comprising:
an upper inner member (61) having a bent part (61 a) protruded in a forward direction of the vehicle when the vehicle is viewed from the side and bent;
a lower inner member (62) joined to the back of the upper inner member (61);
a front cover (51) joined to the upper inner member (61) and the lower inner member (62) and covering the front of a vehicle body; and
an inner rack (70) which is formed between the upper inner member (61) and the lower inner member (62) and an upper part of which is open,
wherein: an uplifted part (63a) uplifted toward the rear of the vehicle and covering a body frame (11) is provided to the center in a direction of vehicle width of the upper inner member (61);
a loading hook (66) is provided to the uplifted part (63a),
a front wall (71), a bottom wall (72) and a side wall (73) of the upper inner member (61) are formed by overhanging the inside in the direction of vehicle width of a lower half under the bent part (61a) of the upper inner member (61) in the forward direction of the vehicle; **characterized in that**
an upper part formed to be a flat face (75) when the vehicle is viewed from the side of the lower inner member (62) is joined to the side wall (73) of the upper inner member (61) along the side wall (73) so that a rear wall (74) of the inner rack (70) is formed in the upper part of the lower inner member (62) and is provided with a flat face (75) in the side view and the front wall (71), the bottom wall (72) and the side wall (73) of the upper inner member (61) are covered with the front cover (51);
a concave portion (64) made concave in the forward direction of the vehicle is provided to the center in the direction of vehicle width of the upper part of the lower inner member (62);
the concave portion (64) is formed so that it is gradually shallower in a lower part of the lower inner member (62);
the uplifted part (63a) and the concave portion (64) are joined so as to form the inner rack (70); and
the concave portion (64) of the lower inner member (62) is arranged under the loading hook (66).

2. The motorcycle (10) according to Claim 1, wherein a shielding wall (65) that covers a part of the opening (76) of the inner rack (70) is formed by a bent upper end of the lower inner member (62).

3. The motorcycle (10) according to Claim 1 or 2,
wherein: a protruded piece (67) protruded upward is provided to the concave portion (64) of the lower inner member (62); and
the protruded piece (67) is overlapped with the upper inner member (61), a fastening member (98) for fastening the loading hook (66) is adapted to pierce the overlapped part, and the fastening member (98) is fastened to the body frame (11) so as to fix the upper inner member (61) and the lower inner member (62) to the body frame (11).

## Patentansprüche

1. Kraftrad (10) als ein Fahrzeug, umfassend:
ein oberes inneres Element (61), welches ein gebogenes Teil (61 a) hat, welches in einer Vorwärtsrichtung von dem Fahrzeug vorsteht, wenn das Fahrzeug von der Seite her betrachtet wird, und gebogen ist;
ein unteres inneres Element (62), welches mit der Rückseite von dem oberen inneren Element (61) verbunden ist;
eine vordere Abdeckung (51), welche mit dem oberen inneren Element (61) und dem unteren inneren Element (62) verbunden ist und die Vorderseite eines Fahrzeugkörpers abdeckt; und
eine innere Ablage (70), welche zwischen dem oberen inneren Element (61) und dem unteren inneren Element (62) ausgebildet ist und von dem ein oberes Teil offen ist,
wobei: ein erhöhtes Teil (63a), welches zur Rückseite von dem Fahrzeug erhöht ist und einen Körperrahmen (11) abdeckt, an der Mitte in einer Richtung der Fahrzeugbreite von dem oberen inneren Element (61) vorgesehen ist;
ein Lasthaken (66) an dem erhöhten Teil (63a) vorgesehen ist,
eine vordere Wand (71), eine Bodenwand (72) und eine Seitenwand (73) von dem oberen inneren Element (61) ausgebildet sind, indem die Innenseite in der Richtung der Fahrzeugbreite von einer unteren Hälfte unter dem gebogenen Teil (61 a) von dem oberen inneren Element (61) in der Vorwärtsrichtung von dem Fahrzeug überhängt;
**dadurch gekennzeichnet, dass**
ein oberes Teil, welches als eine ebene Fläche (75) ausgebildet ist, wenn das Fahrzeug von der Seite von dem unteren inneren Element (62) her betrachtet wird, mit der Seitenwand (73) von dem oberen inneren Element (61) entlang der Seitenwand (73) derart verbunden ist, dass eine hintere Wand (74) von der inneren Ablage (70) in dem oberen Teil von dem unteren inneren Element (62) ausgebildet ist und mit einer ebenen Fläche (75) in der Seitenansicht versehen ist, und die vordere Wand (71), die Bodenwand (72) und die Seitenwand (73) von dem oberen inneren Element (61) mit der vorderen Abdeckung (51) abgedeckt sind;
ein konkaver Abschnitt (64), welcher in der Vorwärtsrichtung des Fahrzeugs konkav ausgebildet ist, in der Mitte in der Richtung der Fahrzeugbreite von dem oberen Teil von dem unteren inneren Element (62) vorgesehen ist;
der konkave Abschnitt (64) derart ausgebildet ist, dass er in einem unteren Teil von dem unteren inneren Element (62) allmählich flacher wird;
das erhöhte Teil (63a) und der konkave Abschnitt (64) miteinander verbunden sind, um die innere Ablage (70) auszubilden; und
der konkave Abschnitt (64) von dem unteren inneren Element (62) unter dem Lasthaken (66) angeordnet ist.

2. Kraftrad (10) nach Anspruch 1, wobei eine Abschirmungswand (65), welche einen Teil der Öffnung (76) von der inneren Ablage (70) abdeckt, durch ein gebogenes oberes Ende von dem unteren inneren Element (62) ausgebildet ist.

3. Kraftrad (10) nach Anspruch 1 oder 2,
wobei: ein vorstehendes Teil (67), welches nach oben hin vorsteht, an dem konkaven Abschnitt (64) von dem unteren inneren Element (62) vorgesehen ist; und
das vorstehende Teil (67) mit dem oberen inneren Element (61) überlappt, ein Befestigungselement (98) zur Befestigung des Lasthakens (66) dazu ausgebildet ist, den überlappenden Teil zu durchdringen, und das Befestigungselement (98) an dem Körperrahmen (11) derart befestigt ist, dass es das obere innere Element (61) und das untere innere Element (62) an dem Körperrahmen (11) fixiert.

## Revendications

1. Motocycle (10) en tant que véhicule comprenant :
un organe interne supérieur (61) ayant une partie incurvée (61a) en saillie dans une direction vers l'avant du véhicule lorsque le véhicule est vu latéralement et incurvée ;
un organe interne inférieur (62) joint à l'arrière de l'organe interne supérieur (61) ;
un capot avant (51) joint à l'organe interne supérieur (61) et à l'organe interne inférieur (62) et couvrant l'avant d'une carrosserie de véhicule ; et
un bâti interne (70) qui est formé entre l'organe interne supérieur (61) et l'organe interne inférieur (62) et dont une partie supérieure est ouverte,
dans lequel : une partie surélevée (63a), surélevée vers l'arrière du véhicule et couvrant un châssis (11), est disposée au centre dans une direction de la largeur de véhicule de l'organe interne supérieur (61) ;
un crochet de chargement (66) est disposé sur la partie surélevée (63a),
une paroi avant (71), une paroi de base (72) et une paroi latérale (73) de l'organe interne supérieur (61) sont formées par la mise en surplomb de l'intérieur dans la direction de la largeur de véhicule d'une moitié inférieure sous la partie incurvée (61a) de l'organe interne supérieur (61) dans la direction vers l'avant du véhicule ; **caractérisé en ce que**
une partie supérieure formée pour être une face plate (75) lorsque le véhicule est vu depuis le côté de l'organe interne inférieur (62) est jointe à la paroi latérale (73) de l'organe interne supérieur (61) le long de la paroi latérale (73) de sorte qu'une paroi arrière (74) du bâti interne (70) est formée dans la partie supérieure de l'organe interne inférieur (62) et est pourvue d'une face plate (75) dans la vue latérale et la paroi avant (71), la paroi de base (72) et la paroi latérale (73) de l'organe interne supérieur (61) sont couvertes avec le capot avant (51) ;
une portion concave (64) rendue concave dans la direction vers l'avant du véhicule est disposée au centre dans la direction de la largeur de véhicule de la partie supérieure de l'organe interne inférieur (62) ;
la portion concave (64) est formée de sorte qu'elle est progressivement moins profonde dans une partie inférieure de l'organe interne inférieur (62) ;
la partie surélevée (63a) et la portion concave (64) sont jointes de manière à former le bâti interne (70) ; et
la portion concave (64) de l'organe interne inférieur (62) est agencée sous le crochet de chargement (66).

2. Motocycle (10) selon la revendication 1, dans lequel une paroi de protection (65) qui couvre une partie de l'ouverture (76) du bâti interne (70) est formée par une extrémité supérieure incurvée de l'organe interne inférieur (62).

3. Motocycle (10) selon la revendication 1 ou 2,
dans lequel : une pièce en saillie (67), en saillie vers le haut, est disposée sur la portion concave (64) de l'organe interne inférieur (62) ; et
la pièce en saillie (67) est chevauchée par l'organe interne supérieur (61), un organe de fixation (98) pour fixer le crochet de chargement (66) est adapté pour percer la partie en chevauchement, et l'organe de fixation (98) est fixé sur le châssis (11) de manière à fixer l'organe interne supérieur (61) et l'organe interne inférieur (62) au châssis (11).
